# EUROPEAN PATENT APPLICATION

(11) **EP 4 841 292 A1**
(43) Date of publication of application: **18.11.2026**
(21) Application number: 25176410.6
(22) Date of filing: 14.05.2025
(51) Int. Cl.: G01S 5/02, G01S 5/12, G01S 5/10, G01S 19/48

(54) **A METHOD FOR GEOGRAPHICALLY POSITIONING A RECEIVER**

(71) Applicant: Rohde & Schwarz GmbH & Co. KG, 81671 München (DE)
(72) Inventor: Hettich, Dominik, 82110 Germering (DE); Cardalda-Garcia, Adrian, 85551 Kirchheim b. München (DE); Gallhauser, Markus, 84453 Mühldorf (DE); Janner, Thomas, 82194 Gröbenzell (DE)
(74) Representative: Rupp, Christian

(57) **Abstract**

The disclosure relates to a method (1) for geographically positioning a receiver (5). The method (1) comprises transmitting (202), by at least one terrestrial transmitter (4), a respective digital wireless broadcast signal (6), the signal (6) comprising transmitter information (601) directly or indirectly indicative of a geographic position of the transmitter (4) of the broadcast signal (6), and timing information (602) indicative of a timing of the broadcast signal (6). The method (1) further comprises: receiving (302) from the at least one terrestrial transmitter (4), the respective broadcast signal (6) at a respective time of arrival, TOA; determining (303), in dependence of the respective transmitter information (601), a geographic position of the at least one terrestrial transmitter (4); determining (304) an angle of arrival, AOA, of the respective broadcast signal (6); and calculating (306) a geographic position of the receiver (5) based on the geographic position of the at least one terrestrial transmitter (4), and based on the AOA, TOA and timing information of the respective broadcast signal (6).

## Description

### TECHNICAL FIELD

The present disclosure relates to a method for geographically positioning a receiver based on received digital wireless broadcast signals from at least one terrestrial transmitter.

### BACKGROUND

Global Navigation Satellite Systems (GNSS) such as GPS and GALILEO transmit unencrypted signals of very low power. These signals may easily be jammed, for example using a 5W jammer, or even spoofed using low-cost software-defined radio (SDR) communication systems.

This vulnerability underscores the need for a reliable backup system to provide accurate timing and positioning information for critical infrastructure, such as power grids, ports, airports, road tolls, cash machines, stock exchanges, and the like.

One viable example for a backup system is a Time Difference of Arrival (TDOA) based system, i.e., a system that determines a position of an object based on a TDOA between received signals. However, pure TDOA calculations demand a highly accurate synchronization of transmitters and require at least three transmitters to determine a precise position.

### SUMMARY

Thus, it is an objective to provide an improved geographical positioning approach that ensures robustness against jamming and spoofing while maintaining high accuracy.

The objective is achieved by the features of the enclosed independent claims.

Advantageous implementations of the present disclosure are further defined in the dependent claims.

According to a first aspect, the present disclosure relates to a method for geographically positioning a receiver. The method comprises: transmitting, by at least one terrestrial transmitter, a respective digital wireless broadcast signal comprising transmitter information directly or indirectly indicative of a geographic position of the transmitter of the broadcast signal and timing information indicative of a timing of the broadcast signal. The method further comprises: receiving from the at least one terrestrial transmitter, the respective broadcast signal at a respective time of arrival (TOA); determining, in dependence of the respective transmitter information, a geographic position of the at least one terrestrial transmitter; determining an angle of arrival (AOA) of the respective broadcast signal; and calculating a geographic position of the receiver based on the geographic position of the at least one terrestrial transmitter, and based on the AOA, TOA and timing information of the respective broadcast signal.

This achieves the advantage that a geographical positioning of a receiver is provided which is largely invulnerable to jamming and spoofing. The positing is thereby based on broadcast signals from only a small number of transmitters, in particular from only one or from two transmitters.

The terrestrial transmitters can be PNT transmitters, i.e. transmitters which transmit Positioning, Navigation, and Timing (PNT) signals.

In an implementation form, at least two respective digital wireless broadcast signals are transmitted by at least two terrestrial transmitters and received at respective TOAs; wherein the method further comprises: calculating, by the receiver, based on the timing information and the TOA of the at least two broadcast signals, a time difference of arrival (TDOA) of the broadcast signals.

In an implementation form, the geographic position of the receiver is calculated based on the TDOA of the broadcast signals, as well as the AOA of at least one of the broadcast signals and the geographic position of at least one of the terrestrial transmitters.

In an implementation form, the method further comprises: receiving a radio frequency (RF) signal from a further transmitter, wherein the RF signal does preferably not comprise timing information; and determining an AOA of the RF signal. The geographic position of the receiver is further calculated based on said AOA of the RF signal.

For instance, the RF signal 9 is a so-called "signal of opportunity", e.g. a broadcast signal not originally intended for positioning. The location of the further transmitter can be known and can be considered when calculating the AOA of the RF signal and the geographic position of the receiver

For example, a height coordinate of the receiver is calculated based on the AOA of the RF signal.

Moreover, the further transmitter transmitting the RF signal may comprise or be at least one of the following: a radio and TV transmitters, a mobile communication station, an air traffic control (ATC) transmitter, a satellite based transmitter, in particular satellite based transmitter not originally intended for positioning, and a wireless local area network (WiFi) router.

In an implementation form, the transmitter information comprises at least one of: a transmitter identifier and a transmitter position.

In an implementation form, the timing information comprises at least one of: a timestamp of the transmission by the transmitter of the broadcast signal, and a positioning reference signal (PRS) mapped into the broadcast signal.

A mapping of the PRS to time-frequency resources of the broadcast signal may depend on a cryptographic key.

In an implementation form, the AOA of the respective broadcast signal is determined by measuring the angle of incidence of the broadcast signal on an antenna array of the receiver.

In an implementation form, the at least one terrestrial transmitter is a GNSS Real-Time Kinematic (RTK) base station or an RTK transmitter. Alternatively, the at least one terrestrial transmitter could also be a different type of transmitter.

In an implementation form, the geographic position of the receiver is calculated based on the geographic position of the at least one transmitter, and based on the AOA, TOA and timing information of the respective broadcast signal using a hybrid algorithm. a

The method may further comprise receiving a correction information indicative of a temporal correction of the timing information of the respective broadcast signals.

The correction information may depend on a ground conductivity detected at a geographic position in between the transmitters.

The broadcast signal may comprise a Further Evolved Multicast Broadcast Mobile Service (FeMBMS) signal including the transmitter information and the timing information.

The broadcast signal may comprise DVB-T2 extension frames (FEF) including the FeMBMS signal.

The broadcast signals may comprise an NB-IoT signal including the transmitter information and the timing information and/or the broadcast signals may comprise a guard band of another broadcasting service, the guard band including the NarrowBand Internet of Things (NB-IoT) signal.

A time-synchronizing of the transmitters may comprise providing a common primary reference clock (PRC) source for the transmitters.

The time-synchronizing may comprise using a Precision Time Protocol (PTP).

The time-synchronizing may comprise using a Synchronous Ethernet (SyncE) protocol.

According to a second aspect, the present disclosure relates to a receiver of digital wireless broadcast signals. The receiver, in particular a receiving unit of the receiver, is configured to receive, from at least one terrestrial transmitter, a respective digital wireless broadcast signal at a respective time of arrival (TOA), the respective broadcast signal comprising: transmitter information directly or indirectly indicative of a geographic position of the transmitter of the broadcast signal, and timing information indicative of a timing of the broadcast signal. The receiver further comprises a processing unit configured to: determine, in dependence of the respective transmitter information, a geographic position of the at least one transmitter, determine an angle of arrival, AOA, of the respective broadcast signal, and calculate a geographic position of the receiver based on the geographic position of the at least one transmitter, and based on the AOA, TOA and timing information of the respective broadcast signal.

According to a third aspect, the present disclosure relates to a system comprising the receiver according to the second aspect of the present disclosure and at least one terrestrial transmitter configured to transmit the at least one digital wireless broadcast signal.

The above description with regard to the method for geographically positioning the receiver according to the first aspect of the present disclosure is correspondingly valid for the receiver according to the second aspect of the present disclosure and the system according to the third aspect of the present disclosure.

### BRIEF DESCRIPTION OF THE DRAWINGS

The above-described aspects and implementations are explained in the following description of embodiments with respect to the enclosed drawings, in which:
- FIG. 1: illustrates a method for geographically positioning a receiver according to an embodiment;
- FIG. 1A: shows a schematic diagram of a system for positioning a receiver according to an embodiment;
- FIG. 1B: shows a schematic diagram of a system for positioning a receiver according to an embodiment;
- FIGs. 2-5: schematically illustrate digital wireless broadcast signals in accordance with the present disclosure;
- FIG. 6: schematically illustrates a terrestrial transmitter according to an embodiment; and
- FIG. 7: schematically illustrates a receiver in according to an embodiment.

### DETAILED DESCRIPTION OF EMBODIMENTS

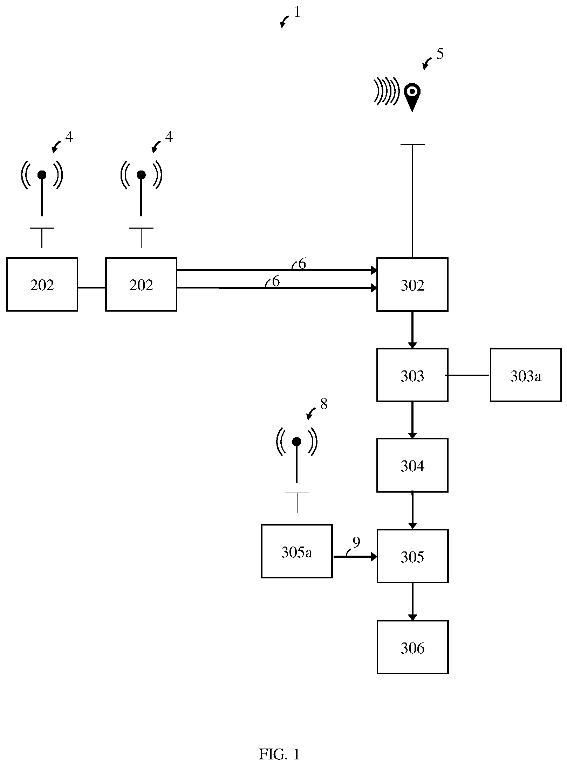

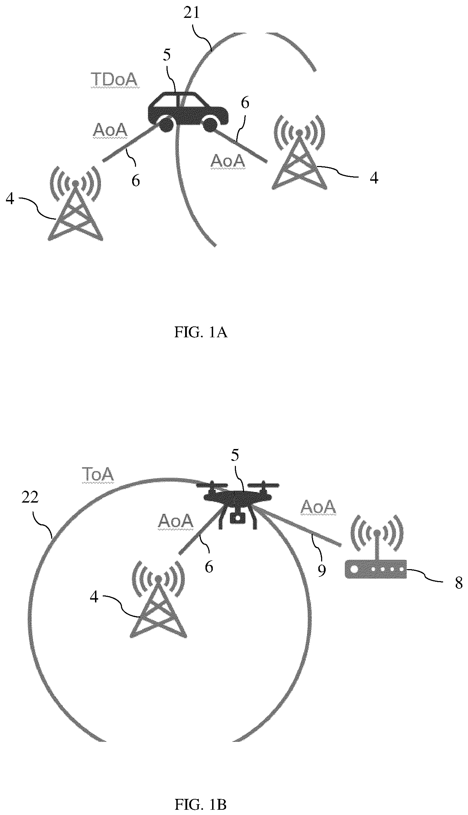

FIG. 1 illustrates a method 1 for geographically positioning a receiver 5 according to an embodiment.

The method 1 comprises the step of transmitting 202, by at least one terrestrial transmitter 4, a respective digital wireless broadcast signal 6, the broadcast signal 6 comprises transmitter information directly or indirectly indicative of a geographic position of the transmitter of the broadcast signal, and timing information indicative of a timing of the broadcast signal.

The method 1 further comprises the steps of: receiving 302 from the at least one transmitters 4, the respective broadcast signal at a respective time of arrival, TOA; determining 303, in dependence of the respective transmitter information, a geographic position of the at least one transmitter; determining 304 an angle of arrival, AOA, of the respective broadcast signal; and calculating 306 a geographic position of the receiver based on the geographic position of the at least one transmitter, and based on the AOA, TOA and timing information of the respective broadcast signal.

In the example shown in Fig. 1, two terrestrial broadcast receivers transmit 202 a respective digital wireless broadcast signal 6, wherein each of these signals 6 comprises transmitter information indicative of the geographic position of the transmitter 202 transmitting the signal 6 and timing information indicative of the timing of the respective broadcast signal 6.

In such a case, where two or more broadcast signals 6 are received 302 from at least two broadcast transmitters 4, the method 1 may comprise the further step of: calculating 303a, by the receiver 302, based on the timing information and the TOA of the at least two broadcast signals 6, a time difference of arrival (TDOA) of the broadcast signals 6. For example, one of the broadcast transmitters 4 can serve as a reference transmitter of the transmitters 6 for the TDOA calculation.

In this case, where two or more broadcast signals 6 are received, the geographic position of the receiver 5 may be calculated 306 based on the TDOA of the broadcast signals 6, as well as the respective AOA of one, more or all of the broadcast signals 6 and the respective geographic position of one, more or all of the terrestrial transmitters 4.

In principle, the method 10 could also be carried out with only one broadcast signal 6 being received 302 from a single transmitter 4. In this case, however, there is no TDOA calculation 303a and, instead, the TOA and timing information of the single broadcast signal 6 are used together with the geographic position of the transmitter and the AOA of the signal 6 to determine 306 the position of the receiver 5. For instance, in this case, a 2D or horizontal position of the receiver 5 could be determined, e.g. a planar or horizontal coordinate without a height coordinate.

Furthermore, the method 1 may comprise the step of: receiving 305a, from a further transmitter 8, an RF signal 9, and determining 305 an AOA of the RF signal 9. The geographic position of the receiver can be calculated 306 further based on the thus determined AOA of the RF signal 9.

Preferably, this further RF signal 9 does not comprise any timing information and/or any timing information of the RF signal 9 is not used when calculating 306 the geographic position of the receiver 5.

The RF signal 9 can be a so-called "signal of opportunity", e.g. a broadcast signal not originally intended for positioning. For instance, the signal of opportunity is a signal from a friendly and known signal source. Such signals of opportunity may change over time or might not be available at all times.

The location of the further transmitter 8 can be known and can be considered when calculating the AOA of the RF signal 9 and the geographic position of the receiver 5. In principle, this approach corresponds to an inverted direction finding.

For example, in case only one broadcast signal 6 was received 302 from a single source 4, this broadcast signal 6 could be used to determine the horizontal position of the receiver 5 and the AOA from the additional RF signal 9 could be used to determine a height coordinate of the receiver 5, enabling a full 3D position of the receiver 5.

The locations of the at least one broadcast transmitter 4 and/or the further transmitter 8 may be known to the receiver 6 from a database hosted or cached by the receiver 5, or may be communicated by the broadcast transmitter 4 and/or the further transmitter 8, e.g. as part of the broadcast signal 6 respectively RF signal 9.

The further transmitter 8 transmitting the RF signal 9 may comprise or be at least one of the following: a radio and TV transmitter, a mobile communication station, an air traffic control (ATC) transmitter, a satellite based transmitter, in particular satellite based transmitter not originally intended for positioning, and a wireless local area network (WiFi or WLAN) router. The RF signal may be a respective signal transmitted by any one of these transmitters, e.g. an ATC signal, a satellite signal or a WiFi/WLAN signal.

The receiver 5 can comprise an antenna array and can be configured to determine the AOA of the respective broadcast signal 6 and/or the RF signal 9 by measuring the angle of incidence of said signals 6, 9 on an antenna array.

The geographic position of the receiver 5 can be calculated 306 based on the geographic position of the at least one transmitter 4, and based on the AOA, TOA and timing information of the respective broadcast signal, in particular based on the TDOA of multiple broadcast signals 6, (and optionally also based on the AOA of the RF signal 9) using a hybrid algorithm.

The steps 302, 303, 303a, 304, 305, 305a and 306 of the method 1 can each be carried out by the receiver 5. In particular, step 302 can be carried out by a receiving unit of the receiver and steps 303-306 can be carried out by a processing unit of the receiver 5.

FIGS. 1A and 1B show schematic diagrams of exemplary systems for positioning a receiver 5. In both figures, the receiver 5 is situated in a vehicle, in FIG. 1A a car and in FIG. 1B a drone. However, these are only exemplary areas of application for the receiver 5.

FIG. 1A shows an exemplary system that comprises two terrestrial transmitters 4 each transmitting a respective digital wireless broadcast signal 6 towards the receiver 5. For example, the terrestrial transmitters 4 generate a hyperbola 21 for positioning the receiver 5 according to the TDOA approach, i.e., based on the time difference of arrival of the signals 6 at the receiver 5, the geographic position of the receiver 5 can be determined to lie on the hyperbola 21. In order to now determine the precise position of the receiver 5 on said hyperbola, an AOA positioning can be carried out based on the known position of the terrestrial transmitters 4 and the angle of arrival of one or both broadcast signals 6. Thus, the terrestrial transmitters 4 and their respective signals 6 are used for both TDOA and AOA calculations. By additionally taking AOA into account only two (instead of three) terrestrial transmitters 4 are required for determining the position of the receiver 5 with high accuracy.

FIG. 1B shows an exemplary system that comprises one terrestrial transmitters 4 and a further transmitter 8 which transmits an RF signal 9, e.g. the so-called "Signal of Opportunity", from a known position. The receiver 5 receives the broadcast signal 6 from the terrestrial transmitter 4 and may determine its distance from said transmitter 4 based on a TOA approach, i.e., taking into account the timing information and TOA of the signal. This distance is indicated by a circle 22 in FIG. 1B. In addition, the receiver 5 may determine its exact position on the circle 22 based on the AOA of the broadcast signal 6 and the RF signal 9. This approach achieves the advantage that only one terrestrial transmitter 4 is required for the positioning. Further, no timing information in the RF signal 9 (Signal of Opportunity) is required.

FIGS. 1A and 1B show two hybrid approaches of using both TOA respectively TDOA and AOA information in order to determine the position of a receiver. By additionally using AOA, the required number of transmitters within range of the receiver 5 can be reduced to two or even to one.

The terrestrial transmitters 4 can be 5G broadcasting PNT (Positioning, Navigation, and Timing) transmitters.

The terrestrial transmitters 4 could also be GNSS Real-Time Kinematic (RTK) base stations or RTK transmitters. In a hybrid TDOA- AOA system, as e.g. shown in FIG. 1A, multiple RTK base stations could act as transmitters, sending signals 6 to the receiver 5. The receiver 5 then measures the time difference of arrival (TDOA) and angle of arrival (AOA) of these signals 6.

In traditional GNSS systems, such RTK base stations serve as reference points that provide known locations and transmit correction data to nearby GNSS receivers. This enables high-precision positioning with an accuracy of 1-2 cm. However, if the satellites are not visible or are blocked by obstacles, the RTK base station may fail to receive the necessary satellite signals. The present disclosure now proposed to repurpose the RTK base stations for TOA or TDOA as well as AOA calculations instead of relying solely on satellite-based corrections.

In a hybrid TDOA-AOA system, as e.g. shown in FIG. 1A, multiple terrestrial transmitters 4, e.g. RTK base stations, can be used to send broadcast signals 6 to the receiver 5. The receiver 5 can measures the time difference of arrival (TDOA) and angle of arrival (AOA) of the signals from each transmitter 4. The general process of the receiver positioning in case of RTK base stations acting as terrestrial transmitters 4 may be as follows:
- RTK base station transmission: Multiple RTK base stations transmit signals to a receiver.
- TDOA measurement: The receiver 5 measures the time difference of arrival of the signals from each pair of RTK base stations.
- AOA measurement: The receiver 5 uses an antenna array to measure the angle of arrival of the signals from each RTK base station.
- Hybrid location calculation: The TDOA and AOA measurements are combined using a hybrid algorithm to calculate the location of the receiver.

The systems shown in FIG. 1A and 1B may be used as a backup or alternative positioning system to satellite-based based approaches (GPS, Galileo etc.). For instance, the correction signals of conventional RTK base stations cannot be used for their intended purpose in certain situations, e.g. if the satellites are gone, malfunctioning, not visible or blocked by obstacles. However, these signals could still be used as broadcast signals 6 for positioning, as discussed above.

In addition, the hybrid approaches of FIG. 1A and 1B could also be used for indoor positioning applications, such as tracking people or objects in a building.

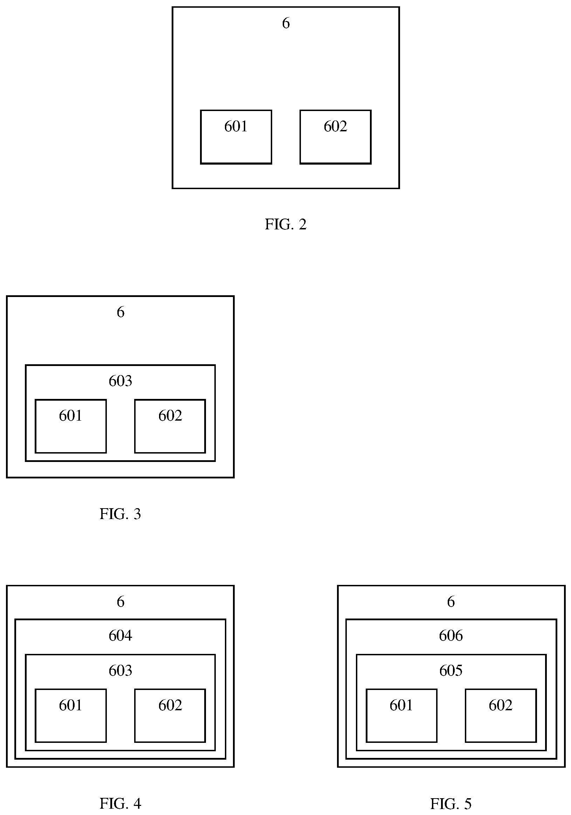

FIG. 2 - 5 schematically illustrate the digital wireless broadcast signals 6 in accordance with the present disclosure.

A digital wireless broadcast signal 6 comprises transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

The broadcast signal 6 may further comprise an RTK signal as explained above.

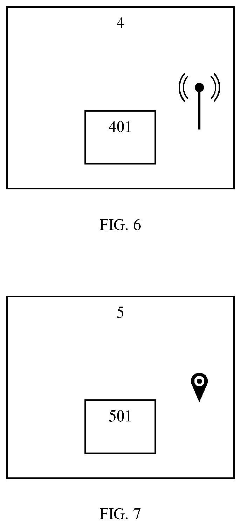

FIG. 6 schematically illustrates the terrestrial transmitter 4 in accordance with the present disclosure.

The terrestrial transmitter 4 of a digital wireless broadcast signal 6 may comprise a processing unit 401.

The processing unit 401 may be configured to transmit 202 the digital wireless broadcast signal 6 comprising transmitter information 601 and timing information 602.

The transmitter information 601 is directly or indirectly indicative of a geographic position of a terrestrial transmitter 4 of the broadcast signal 6. The transmitter information 601 may comprise at least one of: a transmitter identifier, and a geographic transmitter position.

The timing information 602 is indicative of a timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

The terrestrial transmitter 4 may be a GNSS RTK base station and the broadcast signal 6 may comprise an RTK signal as explained above.

FIG. 7 schematically illustrates the receiver 5 in accordance with the present disclosure.

The receiver 5 of digital wireless broadcast signals 6 may comprise a processing unit 501. The processing unit 501 may be a microprocessor.

The receiver 5, in particular a receiving unit of the receiver and/or its processing unit 501, is configured to receive 302, from the at least one terrestrial transmitter 4, a respective digital wireless broadcast signal at a respective time of arrival (TOA). The respective broadcast signal 6 comprises transmitter information 601 and timing information 602.

The transmitter information 601 is directly or indirectly indicative of the geographic position of a terrestrial transmitter 4 of the broadcast signal 6. The transmitter information 601 may comprise at least one of: a transmitter identifier, and a geographic transmitter position.

The timing information 602 is indicative of the timing of the broadcast signal 6. The timing information 602 may comprise at least one of: a timestamp of the transmission by the transmitter 4 of the broadcast signal 6, and a positioning reference signal (PRS) 607 mapped into the broadcast signal 6. A mapping of the PRS 607 to time-frequency resources of the broadcast signal 6 may depend on a cryptographic key.

The broadcast signal 6 may comprise a 3GPP multicast / broadcast signal. In particular, the broadcast signal 6 may comprise an FeMBMS signal 603 including the transmitter information 601 and the timing information 602, wherein the broadcast signal 6 may comprise DVB-T2 extension frames (FEF) 604 including the FeMBMS signal 603. Alternatively, the broadcast signal 6 may comprise an NB-IoT signal 605 including the transmitter information 601 and the timing information 602; and the broadcast signal 6 may comprise a guard band 606 of another broadcasting service (e.g., DVB-T2), the guard band 606 including the NB-IoT signal 605.

The broadcast signal 6 may further be an RTK signal.

The processing unit 501 of the transmitter 4 may further configured to determine, in dependence of the respective transmitter information, the geographic position of the at least one transmitter, to determine the angle of arrival (AOA), of the respective broadcast signal, and to calculate the geographic position of the receiver 5 based on the geographic position of the at least one transmitter 4, and based on the AOA, TOA and timing information of the respective broadcast signal.

The processing unit 501 may further be configured to receive a correction information indicative of a temporal correction of the timing information 602 of a respective broadcast signal 6. The correction information may depend on a ground conductivity detected at a geographic position in between the transmitters.

The geographic position of the at least one transmitters 4 may further be determined by retrieving the respective geographic position of the respective transmitter 4 in dependence of the transmitter identifier, for example from a database hosted or cached by the receiver 5, or directly from the geographic transmitter position of the respective transmitter information 601.

The calculating 306 the geographic position of the receiver 5 may comprise performing multilateration in dependence of the geographic positions of the transmitters 4 and a plurality of pseudo-range differences corresponding to the plurality of TDOAs.

## Claims

1. A method (1) for geographically positioning a receiver (5), comprising:
transmitting (202), by at least one terrestrial transmitter (4), a respective digital wireless broadcast signal (6) comprising:
• transmitter information (601) directly or indirectly indicative of a geographic position of the transmitter (4) of the broadcast signal (6), and
• timing information (602) indicative of a timing of the broadcast signal (6);
receiving (302) from the at least one terrestrial transmitter (4), the respective broadcast signal (6) at a respective time of arrival, TOA;
determining (303), in dependence of the respective transmitter information (601), a geographic position of the at least one terrestrial transmitter (4);
determining (304) an angle of arrival, AOA, of the respective broadcast signal (6); and
calculating (306) a geographic position of the receiver (5) based on the geographic position of the at least one terrestrial transmitter (4), and based on the AOA, TOA and timing information of the respective broadcast signal (6).

2. The method (1) according to claim 1,
wherein at least two respective digital wireless broadcast signals (6) are transmitted by at least two terrestrial transmitters (4) and received at respective TOAs; and wherein the method (1) further comprises:
calculating (303a), by the receiver (5), based on the timing information and the TOA of the at least two broadcast signals (6), a time difference of arrival, TDOA, of the broadcast signals (6).

3. The method (1) according to claim 2,
wherein the geographic position of the receiver (5) is calculated (306) based on the TDOA of the broadcast signals (6), as well as the AOA of at least one of the broadcast signals (6) and the geographic position of at least one of the terrestrial transmitters (4).

4. The method (1) according to any one of the preceding claims, further comprising:
receiving (305a) an RF signal (9) from a further transmitter (8), wherein the RF signal does preferably not comprise timing information; and
determining (305) an AOA of the RF signal (9);
wherein the geographic position of the receiver (5) is further calculated (306) based on said AOA of the RF signal (9).

5. The method (1) of claim 4,
wherein a height coordinate of the receiver (5) is calculated based on the AOA of the RF signal (9).

6. The method (1) of claim 4 or 5,
wherein the further transmitter (8) transmitting the RF signal (9) comprises at least one of the following:
• a radio and TV transmitters,
• a mobile communication station,
• an air traffic control, ATC, transmitter,
• a satellite based transmitter, in particular satellite based transmitter not originally intended for positioning, and
• a wireless local area network router.

7. The method (1) according to any one of the preceding claims,
wherein the transmitter information comprising at least one of: a transmitter identifier, and a transmitter position.

8. The method (1) according to any one of the preceding claims,
wherein the timing information comprising at least one of: a timestamp of the transmission by the terrestrial transmitter (4) of the broadcast signal (6), and a positioning reference signal, PRS, mapped into the broadcast signal (6).

9. The method (1) according to any one of the preceding claims,
wherein the AOA of the respective broadcast signal (6) is determined by measuring the angle of incidence of the broadcast signal (6) on an antenna array of the receiver (5).

10. The method (1) according to any one of the preceding claims,
wherein the at least one terrestrial transmitter (4) is a GNSS Real-Time Kinematic, RTK, base station or an RTK transmitter.

11. The method (1) according to any one of the preceding claims,
wherein the geographic position of the receiver (5) is calculated based on the geographic position of the at least one terrestrial transmitter (4), and based on the AOA, TOA and timing information of the respective broadcast signal (6) using a hybrid algorithm.

12. A receiver (5) of digital wireless broadcast signals (6),
wherein the receiver (5) is configured to receive, from at least one terrestrial transmitter, a respective digital wireless broadcast signal (6) at a respective time of arrival (TOA), the respective broadcast signal (6) comprising:
• transmitter information directly or indirectly indicative of a geographic position of the terrestrial transmitter of the broadcast signal (6), and
• timing information indicative of a timing of the broadcast signal (6); and
wherein the receiver (5) comprises a processing unit (501) configured to:
• determine, in dependence of the respective transmitter information, a geographic position of the at least one transmitter,
• determine an angle of arrival, AOA, of the respective broadcast signal (6), and
• calculate a geographic position of the receiver (5) based on the geographic position of the at least one transmitter, and based on the AOA, TOA and timing information of the respective broadcast signal (6).

13. A system comprising:
the receiver (5) of claim 12, and
at least one terrestrial transmitter (4) configured to transmit the at least one digital wireless broadcast signal (6).
